# EUROPÄISCHE PATENTSCHRIFT

(11) **EP 3 056 989 B1**
(45) Veröffentlichungstag und Bekanntmachung des Hinweises auf die Patenterteilung: **29.08.2018**
(21) Anmeldenummer: 16155450.6
(22) Anmeldetag: 12.02.2016
(51) Int. Cl.: G06F 8/76, G06F 8/61, G06F 9/48, H04W 4/50, H04W 4/60

(54) **ÜBERTRAGUNG VON APPLIKATIONEN**
TRANSFER OF APPLICATIONS
TRANSFERT D'APPLICATIONS

(30) Priorität: 12.02.2015 DE 102015102016
(43) Veröffentlichungstag der Anmeldung: 17.08.2016
(73) Patentinhaber: Deutsche Telekom AG, 53113 Bonn (DE)
(72) Erfinder: Wang, Hao, 53175 Bonn (DE)
(74) Vertreter: Braun-Dullaeus Pannen Patent- und Rechtsanwälte

(56) Entgegenhaltungen:
- WO-A1-97/30549
- WO-A1-99/22325
- US-A1- 2013 332 928

## Beschreibung

Die Erfindung betrifft ein Verfahren zur Übertragung einer Vielzahl von Applikationen (Apps), die auf einem ersten mobilen Endgerät, meist einem Smartphone, gespeichert sind, auf ein zweites mobiles Endgerät respektive ein Smartphone, wobei die auf dem ersten mobilen Endgerät gespeicherten Applikationen einer ersten Plattform, insbesondere einem herstellerspezifischen Online-Portal, zuzuordnen sind. Die Erfindung betrifft auch ein System zur Umsetzung des Verfahrens.

Derartige Applikationen (im Folgenden auch "Apps") erfreuen sich heutzutage großer Beliebtheit. Sie werden vom Nutzer je nach Betriebssystem von der entsprechenden Plattform auf sein Smartphone geladen und befähigen dieses über die Auswahl eines dargebotenen Icons zur Ausführung unterschiedlichster Funktionalitäten. Dabei reicht die Bandbreite solcher Apps von einfachsten Werkzeugen und Spaßanwendungen bis hin zu komplexen Computerspielen und Anwenderprogrammen. Viele Apps ermöglichen auch eine effiziente Nutzung bestimmter Webanwendungen oder verschaffen einen einfachen Zugang zu Informationsangeboten. Durch die Bestückung mit Apps wird jedes Smartphone zu einem individuell konzipierten Hilfsmittel, das für den Nutzer nicht nur einen hohen materiellen sondern auch einen entsprechend ideellen Wert darstellt.

Wenn der Nutzer sich ein neues Smartphone zulegt und dieses entsprechend dem alten mit denselben Apps, die auch käuflich erwerben musste, einrichten will, dann ist das meist kein Problem, zumindest solange er sich auf derselben Plattform befindet. Besonders weit verbreitet sind Plattformen, zu denen Endgeräte mit einem Android Betriebssystem Zugang haben, und solche, zu denen iOS Apple® Geräte Zugang haben.

Bekanntermaßen laufen Android-Apps aber nicht auf iOS und umgekehrt, da jede App speziell für ein bestimmtes Betriebssystem programmiert ist. Entsprechend ist es auch nicht möglich, die Apps, die auf einem ersten mobilen Endgerät mit dem ersten Betriebssystem laufen, auf das zweite mobile Endgerät mit dem zweiten Betriebssystem zu übertragen. Mit einem Wechsel des Betriebssystems geht der Nutzer daher das Risiko ein, dass seine teuer erkaufte und mühevoll gepflegte Sammlung von Apps verloren geht.

Aus der US 2013/0332928 A1 ist eine Verfahrensweise bekannt, wie eine auf einem System laufende Einzelanwendung zur Anpassung an die technischen Voraussetzungen eines anderen Systems umgeschrieben und auf dem anderen System installiert wird.

Aus der WO 97/30549 A1 ist ein System zum Download verschiedener Versionen von Software auf unterschiedliche Endgeräte bekannt.

Aus der WO 99/22325 ein Verfahren zum Installieren von Anwendungen für eine Vielzahl von Mobilgeräten aus einer Speicherquelle bekannt, wobei jedes Mobilgerät von einem anderen Typ ist und jede Anwendung jeweils für einen bestimmten Typ von Mobilgeräten ausgelegt ist.

Es ist nunmehr Aufgabe der vorliegenden Erfindung, eine Möglichkeit zu schaffen, Applikationen auf einfache Weise und unabhängig von dem jeweiligen Betriebssystem von einem ersten mobilen Endgerät auf ein zweites mobiles Endgerät zu übertragen. Diese Aufgaben werden gelöst durch ein Verfahren nach Anspruch 1 und ein System nach Anspruch 6. bevorzugte Ausgestaltungen ergeben sich aus den jeweiligen Unteransprüchen.

Anspruchsgemäß liegt der Kern der Erfindung in dem Synchronisationsserver, der an zentraler Stelle in einem Kommunikationsnetz, insbesondere dem Internet, installiert und über eine entsprechende im jeweiligen Endgerät befindliche Client-Applikation (Synchronisationsclient) erreichbar ist. Auf eine über das Kommunikationsnetz geführte Anfrage seitens der Client-Applikation sucht der Synchronisationsserver automatisch anhand spezifischer Charakteristika der zu übertragenden Applikationen nach Entsprechungen (Pendants) dieser zu übertragenden Applikationen (Apps) auf anderen Plattformen. Wenn er Entsprechungen der Apps gefunden hat, speichert er diese Information beispielsweise in Form einer Übertragungsliste, um diese dem zweiten mobilen Endgerät zur Verfügung stellen zu können.

Zur Umsetzung des Verfahrens verbindet sich das erste mobile Endgerät erfindungsgemäß zunächst mit dem Synchronisationsserver und sendet diesem eine Information bezüglich derjenigen Applikationen zu, für die eine Übertragung auf ein anderes Endgerät gewünscht wird. Auf Grundlage dieser Informationen sucht der zentrale Synchronisationsserver auf mindestens einer zweiten Plattform nach Entsprechungen der gewünschten Applikationen. Die gefundenen Applikationen speichert er beispielsweise in der Übertragungsliste in Verbindung mit den Apps oder in Verbindung mit Links zu den Apps. Die Übertragungsliste kann dann zu einem späteren Zeitpunkt auf das zweite mobile Endgerät übertragen werden.

Bekanntermaßen gibt es von vielen Apps mehrere Versionen. Insbesondere ist meist eine Version der App vorhanden, die für die eine Plattform, wie Android®, programmiert ist und mindestens eine andere Version, die für eine andere Plattform, insbesondere iOS®, programmiert ist. Beide Versionen der Apps gleichen sich in spezifischen Charakteristika insbesondere in Ihrem Namen, ihrem Icon, in der Menüführung und der Funktionalität identisch. Wegen dieser Identität ist es besonders vorteilhaft, wenn bei der Suche nach Entsprechungen auf den anderen Plattformen solche identischen Apps gefunden und zur Übertragung bereit gehalten werden. Bei der Suche nach identischen Entsprechungen der Apps kann der Synchronisationsserver als spezifisches Charakteristikum den Namen und/oder den Autor der App als Kriterium nutzen.

Es ist auch möglich, dass auf den anderen Plattformen keine identischen Apps zu finden sind. In diesem Fall kann es vorteilhaft sein, wenn der Synchronisationsserver auf den anderen Plattformen nach Apps sucht, die zumindest ähnliche Funktionalitäten bereit stellen. In dem Falle können als Entsprechungen solche in ihrer Funktionalität ähnlichen Applikationen zur Übertragung angeboten werden. Das spezifische Charakteristikum ist somit die Funktionalität, die sich beispielsweise anhand von funktionsspezifischen Suchbegriffen, wie "Wetter", "Verkehr", "Tanken" o.ä., im Rahmen einer Kategorisierung oder in der Begleitinformation der Apps ermitteln lässt. Insbesondere können als Alternativen die populärsten Apps vorgeschlagen werden, die von der Plattform angeboten werden. Dabei ist es sinnvoll, den Nutzer auf das Fehlen einer identischen App hinzuweisen und ihm die ähnliche App zusammen mit den Bedingungen für das Herunterladen vorzuschlagen. Nachdem der Nutzer darauf hingewiesen wurde, kann er selber entscheiden, ob er die App installieren möchte.

Um das Verfahren zu initiieren, ist es vorteilhaft, wenn der Nutzer sich im System insbesondere beim Synchronisationsserver registriert. Eine solche Registrierung ist nicht unbedingt notwendig, wenn zwischen dem Nutzer und dem System eine individuelle ID zur Identifikation von Listen (Listen-ID) vereinbart wurde, die nur dem Nutzer bekannt ist und die er für spätere Zugänge bewahrt.

In einer vorteilhaften Ausführungsform läuft das Verfahren in folgenden Schritten ab: Zunächst wird seitens des Synchronisationsclients eine originale App-Liste der auf dem Endgerät laufenden Applikationen angelegt. Dabei ist es vorteilhaft, die Apps in der App-Liste mit ihrer plattformspezifischen Identifikation und/oder dem Namen, respektive einem anderen charakterisierenden Parameter, in Verbindung zu bringen. Die Erstellung dieser App-Liste kann automatisch erfolgen. Es ist aber auch möglich, dass der Nutzer sie durch Editieren selber erstellt oder bearbeiten. Für einen Nutzer-Account können mehrere solcher App-Listen periodisch oder auf Nutzeranfrage generiert werden. Die App-Liste wird dem Synchronisationsserver zugesandt, der sie dann zur Grundlage seiner Suche macht. Dabei kann es vorteilhaft sein, wenn der Nutzer auswählt, welche App-Liste er nutzen möchte. Im Zweifel wird die zuletzt erstellte verwendet.

Als nächsten Schritt erzeugt der Synchronisationsserver für die App-Liste eine eindeutige App-Listen-Identifikation (App-Listen-ID) und sendet diese der Client-Applikation zurück. Da die App-Listen-ID einzigartig ist, kann sie für spätere Übertragungen genutzt werden. Der App-Listen-ID können auch ein Datum und/oder eine Ordnungsziffer zugeordnet sein.

Der Synchronisationsserver sucht anhand der in der übermittelten App-Liste befindlichen Informationen auf der Grundlage spezifischer Charakteristika nach identischen oder ähnlichen Entsprechungen der Applikationen. Die Entsprechungen kann er beispielsweise anhand von Adressdaten direkt an entsprechender Stelle in die App-Liste eintragen oder eine weitere, der Originalliste zugeordnete Liste, erstellen. Anhand der vormals übermittelten Listen-Identifikation kann eine Client-Applikation den Synchronisationsserver auffordern, die App-Liste oder die zugeordnete Liste zu übertragen. Die in den übertragenen Listen enthaltene Information ermöglicht den unmittelbaren Abruf der Applikationen über ein zweites Gerät. Die Entsprechungen der Apps werden dann von der jeweiligen Vertriebsplattform an die Client-Applikation übertragen und stehen dann dem Endgerät zur Verfügung.

App-Listen können privat oder öffentlich sein. Bei einer öffentlichen App-Listen kann die App-Listen-ID mit anderen Nutzern geteilt werden, so dass diese die entsprechenden Apps ebenfalls installieren können.

Die Erfindung wird nachfolgend anhand der Figuren näher erläutert. Es zeigen:
- **Figur 1**: ein System zur Umsetzung der Erfindung und
- **Figur 2**: ein Ablaufdiagramm der erfindungsgemäßen Vorgehensweise

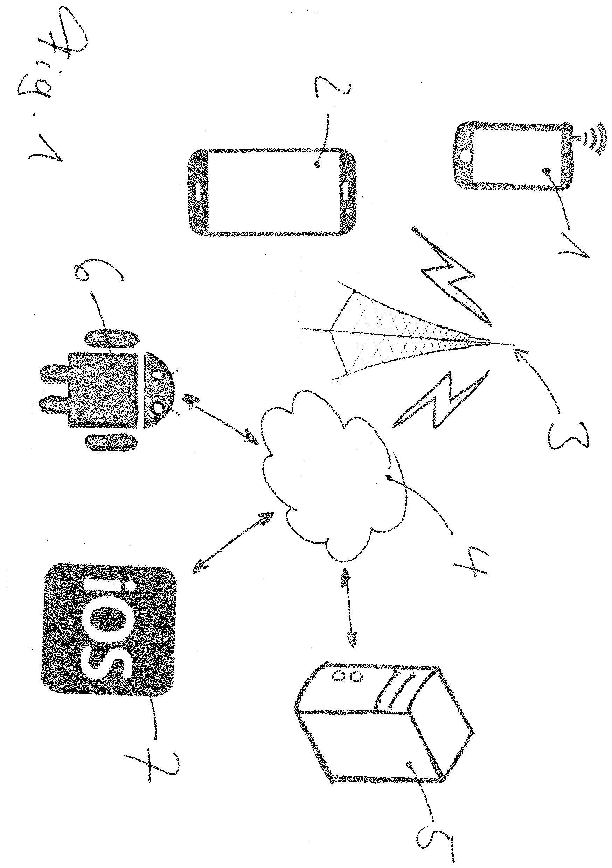

Das in Figur 1 gezeigte System umfasst ein erstes Smartphone 1 und ein zweites Smartphone 2, die beide demselben Nutzer zuzuordnen sind. Auf dem ersten Smartphone 1 mit dem Betriebssystem Android® sind eine Vielzahl von Applikationen (Apps) installiert, die der Nutzer auf sein neues Apple® Smartphone 2 mit dem Betriebssystem iOS® übertragen will. Für die Übertragung ist auf beiden Smartphones 1 und 2 eine entsprechende Software, der sogenannte Synchronisationsclient, vorgesehen. Über ein Mobilfunknetz 3 haben beide Smartphones 1 und 2 jeweils einen Zugang zum Internet 4.

Über das Internet 4 kann sich jeder Synchronisationsclient mit einem entsprechenden Synchronisationsserver 5 verbinden, der sich ebenfalls über das Internet Zugang zu verschiedenen Vertriebsplattformen für Applikationen verschafft. Im vorliegenden Fall hat der Synchronisationsserver 5 Zugriff auf eine Plattform für Android® 6 und eine für iOS® 7.

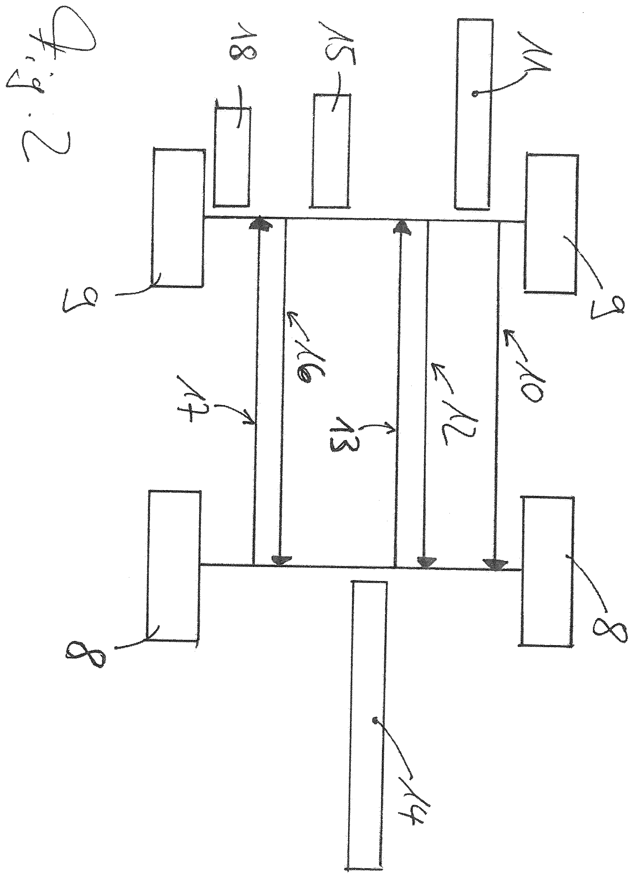

In Figur 2 ist der erfindungsgemäße Ablauf der Übertragung von Apps, mithin die App-Synchronisation, von dem ersten Smartphone zu dem zweiten Smartphone vermittels der Synchronisationsserver-Funktion 8 symbolisiert. Wie dargelegt, ist auf den Smartphone jeweils ein Synchronisationsclient 9 vorhanden. Die in dem Diagramm anhand von Pfeilen dargestellten Kommunikationsschritte erfolgen zwischen dem Synchronisationsclient 9 und der der Synchronisationsserver-Funktion 8 in zeitlicher Abfolge nach unten mit folgender Schrittfolge:
Im ersten Schritt 10 schickt der Synchronisationsclient 9 eine Mitteilung an den Synchronisationsserver 8 mit der Aufforderung eine Registrierung vorzunehmen. Seitens des Synchronisationsservers 8 wird daraufhin ein dem Nutzer zugeordneter Account generiert. Um die Übertragung einleiten zu können, untersucht der Synchronisationsclient 9 "sein" Smartphone auf das Vorliegen von Apps und trägt die gefundenen Apps zusammen mit ihrem plattformspezifischen Identifizierer in eine App-Liste ein. Im Falle von Android® ist der Identifizierer ein "package name", im Falle von iOS eine "App ID" und im Falle von dem Betriebssystem Windows® ein "Globally Unique Identifier (GUID)". Im vorliegenden Beispiel erstellt der Synchronisationsclient 9 eine App-Liste enthaltend Android® Apps.

Die solchermaßen erstellte App-Liste sendet er in Schritt 12 an den Synchronisationsserver 8, der für diese App-Liste eine eindeutige App-Listen-Identifikation (App-Listen-ID) generiert und diese in Schritt 13 zurück an den Synchronisationsclient 9 sendet.

Nun geht der Synchronisationsserver 8 in Schritt 14 die in der App-Liste enthaltenen Android®-Apps durch und sucht anhand spezifischer Charakteristika Entsprechungen respektive die entsprechenden Pendants dieser Apps beispielsweise in der iOS® Plattform 7. Falls er dort keine identischen Apps findet, kann er dem Nutzer ähnliche Apps anbieten, also Applikationen, die eine nahezu identische Funktionalität bieten. Die gefundenen identischen und/oder ähnlichen Apps legt er unter ihrem jeweiligen Identifizierer in der App-Liste oder einer weiteren zugeordneten Liste ab.

Diese vom Synchronisationsserver 8 generierte Liste steht über die App-Listen-ID in eindeutigen Zusammenhang mit der ursprünglichen App-Liste. In der Liste kann dieselbe App jeweils für verschiedene Betriebssysteme hinterlegt werden, so dass später je nach Betriebssystem des neuen Smartphones ausgewählt werden kann.

In Schritt 15 nimmt der Nutzer sein neues Smartphone in Betrieb und initiiert eine Übertragung. Dazu sendet der auch auf dem neuen Smartphone installierte Synchronisationsclient 9 in Schritt 16 die ihm zugängliche, weil beispielsweise vom Nutzer eingegebene eindeutige App-Listen-ID zusammen mit einer Information über das nunmehr vom neuen Smartphone verwendete Betriebssystem an den Synchronisationsserver 8. Dieser schickt die vorbereitete Liste der für das neue Betriebssystem gefundenen Apps in Schritt 17 an den Synchronisationsclient 9, der die Apps dann von der entsprechenden Plattform herunter laden kann (Schritt 18).

### Bezugszeichenliste

- 1: erstes Smartphone
- 2: zweites Smartphone
- 3: Mobilfunknetz
- 4: Internet
- 5: Synchronisationsserver
- 6: Plattform für Android®
- 7: Plattform für iOS®
- 8: Synchronisationsserver-Funktion (Figur 2)
- 9: Synchronisationsclient (Figur 2)
- 10-17: einzelne Verfahrensschritte

## Patentansprüche

1. Verfahren zur Übertragung einer Vielzahl von Applikationen, die auf einem ersten mobilen Endgerät (1) gespeichert sind, auf ein zweites mobiles Endgerät (2), wobei die auf dem ersten mobilen Endgerät (1) gespeicherten Applikationen einer ersten Plattform zuzuordnen sind,
wobei das erste mobile Endgerät (1) mit einem Synchronisationsserver (5) verbunden wird,
wobei der Synchronisationsserver (5) anhand der App-Liste und spezifischer Charakteristika der zu übertragenden Applikationen auf mindestens einer zweiten Plattform nach Entsprechungen der zu übertragenden Applikationen sucht,
wobei die gefundenen Entsprechungen der zu übertragenden Applikationen in einer Übertragungsliste, nämlich in der App-Liste oder einer weiteren der App-Liste zugeordneten Liste, eingetragen und jeweils mit ihrer plattformspezifischen Identifikation versehen werden und
wobei die Entsprechungen von der zweiten Plattform an die Client-Applikation (9) des zweiten Endgerätes (2) übertragen werden und dem zweiten Endgerät zur Verfügung stehen,
**dadurch gekennzeichnet,**
**dass** dem Synchronisationsserver (5) vom ersten mobilen Endgerät (1) eine Information bezüglich der zu übertragenden Applikationen zugesendet wird, wobei die Information eine App-Liste der zu übertragenden Applikationen mit jeweils ihrer plattformspezifischen Identifikation enthält,
**dass** die gespeicherten Applikationen von einem auf dem ersten Endgerät (1) laufenden Synchronisationsclient (9) zu der App-Liste zusammengestellt und jeweils mit ihrer plattformspezifischen Identifikation versehen werden,
**dass** der Synchronisationsserver (5) für die App-Liste eine eindeutige Listen-Identifikation erzeugt und diese dem Synchronisationsclient (9) zurück sendet und
**dass** der Synchronisationsserver (5) die App-Liste oder die weitere Liste nach Aufforderung anhand der Listen-Identifikation an eine Client-Applikation des wobei zweiten Endgerätes (2) sendet.

2. Verfahren nach Anspruch 1,
**dadurch gekennzeichnet,**
**dass** als Entsprechungen identische Applikationen der zweiten Plattform anhand identischer spezifischer Charakteristika gesucht und aufgelistet werden.

3. Verfahren nach Anspruch 1,
**dadurch gekennzeichnet,**
**dass** als Entsprechungen in ihrer Funktionalität ähnliche Applikationen der zweiten Plattform, insbesondere anhand von funktionsspezifischen Suchbegriffen, gesucht und aufgelistet werden.

4. Verfahren nach einem der vorherigen Ansprüche,
**dadurch gekennzeichnet,**
**dass** der zentrale Synchronisationsserver (5) auf allen zur Verfügung stehenden Plattformen nach Entsprechungen sucht und die gefundenen Entsprechungen zusammen mit der Information der jeweiligen Plattform in die App-Liste oder in die weitere Liste einträgt.

5. System zur Umsetzung des Verfahrens nach einem der vorherigen Ansprüche aufweisend zwei mobile Endgeräte (1,2) wobei auf einem ersten der beiden mobilen Endgeräte (1) eine Vielzahl von Applikationen einer ersten Plattform installiert sind,
**gekennzeichnet durch**
einen mit dem ersten mobilen Endgerät (1) über ein Kommunikationsnetz (3) in Verbindung stehenden Synchronisationsserver (5), der geeignet ist zur Suche nach auf einer zweiten Plattform befindlichen Entsprechungen der auf dem ersten mobilen Endgerät (1) installierten Applikationen und der geeignet ist zur Übertragung von Information bezüglich der gefundenen Entsprechungen auf ein zweites mobiles Endgerät.

## Claims

1. A method of transferring a plurality of applications stored on a first mobile terminal device (1) to a second mobile terminal device (2), wherein the applications stored on the first mobile terminal device (1) are to be assigned to a first platform,
wherein the first mobile terminal device (1) is connected to synchronisation server (5),
wherein by way of the app list and specific characteristics of the applications to be transferred the synchronisation server (5) searches for equivalents of the applications to be transferred on at least one second platform,
wherein the found equivalents of the applications to be transferred are entered into a transfer list, namely in the app list or another list assigned to the app list and are each provided with their platform-specific identification and
wherein the equivalents are transferred from the second platform to the client application (9) of the second terminal device (2) and become available to the second terminal device,
**characterised in that**
information relating to the applications to be transferred is sent from the first mobile terminal device (1) to the synchronisation server (5), wherein the information contains an app list of the applications to be transferred with their platform-specific identification,
**in that** the stored applications are compiled into the app list by a synchronisation client (9) running on the first mobile terminal device (1) and are each provided with their platform-specific identification,
**in that** for the app list the synchronisation server (5) generates a clear listen identification and sends this back to the synchronisation client (9) and
**in that** on being requested the synchronisation server (5) sends the app list or the further list by way of the listen identification to a client application of the second mobile terminal device (2).

2. The method according to claim 1,
**characterised in that**
as equivalents identical applications of the second platform are sought and listed by way of identical specific characteristics.

3. The method according to claim 1,
**characterised in that**
as equivalents, applications of the second platform which are similar in function, are searched for and listed, in particular by way of function-specific search terms.

4. The method according to any one of the preceding claims,
**characterised in that**
the central synchronisation server (5) searches for equivalents on all available platforms and enters the found equivalents, along with the information of the relevant platform in the app list or in the further list.

5. A system for implementing the method according to any one of the preceding claims comprising two mobile terminal devices (1, 2) wherein installed on a first of the two mobile terminal devices (1) is a plurality of applications of a first platform,
**characterised by**
a synchronisation server (5) connected to the first mobile terminal device (1) by way of a communication network (3) which is suitable for searching for equivalents of the applications installed on the first mobile terminal device (1) on a second platform and which is suitable for transferring information about the found equivalents to a second mobile terminal device.

## Revendications

1. Procédé, destiné à transférer sur un deuxième terminal mobile (2) une pluralité d'applications qui sont mémorisées sur un premier terminal mobile (1), sachant que les applications mémorisées sur le premier terminal mobile (1) doivent être affectées à une première plate-forme,
le premier terminal mobile (1) étant connecté avec un serveur de synchronisation (5),
sachant qu'à l'aide de la liste des applis et de caractéristiques spécifiques aux applications qui doivent être transférées, le serveur de synchronisation (5) cherche sur au moins une deuxième plate-forme des correspondances aux applications qui doivent être transférées,
les correspondances trouvées aux applications qui doivent être transférées étant mentionnées dans une liste de transferts, à savoir dans la liste des appli ou une autre liste affectée à la liste des appli et étant munies chaque fois de leur identification spécifique à la plate-forme et
les correspondances étant transférées de la deuxième plate-forme à l'application cliente (9) du deuxième terminal (2) et étant à la disposition du deuxième terminal,
**caractérisé**
**en ce qu'**au serveur de synchronisation (5) est envoyée par le premier terminal mobile (1) une information au sujet des applications qui doivent être transférées, sachant que l'information contient une liste des applis des applications qui doivent être transférées avec chacune son identification spécifique à la plate-forme,
**en ce que** les applications mémorisées sont regroupées par un client de synchronisation (9) exécuté sur le premier terminal (1) pour obtenir la liste des applis et sont munies chacune de son identification spécifique à la plate-forme,
**en ce que** le serveur de synchronisation (5) créé pour la liste des appli une identification de liste univoque et la renvoie au client de synchronisation (9) et
**en ce que** le serveur de synchronisation (5) envoie la liste des applis ou l'autre liste, après invitation, à l'aide de l'identification de liste à une application cliente du deuxième terminal (2).

2. Procédé selon la revendication 1,
**caractérisé en ce qu'**
en qualité de correspondances, des applications identiques de la deuxième plate-forme sont cherchées et listées à l'aide de caractéristiques identiques.

3. Procédé selon la revendication 1,
**caractérisé en ce qu'**
en tant que correspondances, des applications analogues dans leur fonctionnalité de la deuxième plate-forme sont recherchées et listées, notamment à l'aide de termes de recherche spécifiques à la fonction.

4. Procédé selon l'une quelconque des revendications précédentes,
**caractérisé en ce que**
le serveur de synchronisation (5) centralisé cherche des correspondances sur toutes les plates-formes disponibles et mentionne toues les correspondances trouvées, en commun avec l'information de la plate-forme concernée dans la liste des applis ou dans l'autre liste.

5. Système, destiné à mettre en application le procédé selon l'une quelconque des revendications précédentes, comportant deux terminaux mobiles (1, 2), sachant que sur le premier des deux terminaux mobiles (1) est installée une pluralité d'applications d'une première plate-forme,
**caractérisé par**
un serveur de synchronisation (5), qui est connecté par l'intermédiaire d'un réseau de communication (3) avec le premier terminal mobile (1), qui est apte à la recherche de correspondances à des applications installées sur le premier terminal mobile (1) qui se trouvent sur une deuxième plate-forme et qui est apte à transférer une information concernant les correspondances trouvées sur un deuxième terminal mobile.
